# EUROPÄISCHE PATENTSCHRIFT

(11) **EP 0 364 924 B1**
(45) Veröffentlichungstag und Bekanntmachung des Hinweises auf die Patenterteilung: **22.02.1995**
(21) Anmeldenummer: 89119173.6
(22) Anmeldetag: 16.10.1989
(51) Int. Cl.: B29C 61/06

(54) **Wärmeschrumpfbare Umhüllung mit geringer Einreissfälligkeit**
Heat-shrinkable sleeve with a low tear tendency
Manchon thermorétractable avec une faible tendance au déchirement

(30) Priorität: 18.10.1988 DE 3835471
(43) Veröffentlichungstag der Anmeldung: 25.04.1990
(73) Patentinhaber: RXS Schrumpftechnik-Garnituren GmbH, D-58093 Hagen (DE)
(72) Erfinder: Heinze, Volker, Dr. rer. nat., D-5800 Hagen 5 (DE); Kupczyk, Andreas, D-5800 Hagen 1 (DE)
(74) Vertreter: Fuchs, Franz-Josef, Dr.-Ing.

(56) Entgegenhaltungen:
- EP-A- 0 084 360
- EP-A- 0 117 025
- EP-A- 0 266 289
- EP-A- 0 285 444
- EP-A- 0 292 676
- EP-A- 0 299 439
- DE-A- 3 202 547
- GB-A- 1 161 259
- GB-A- 2 135 239
- JP-A-57 199 626
- US-A- 3 984 005
- US-A- 4 863 768
- DATABASE WPIL, accession number 83-13751K [06], Derwent Publications Ltd.,London, GB;&JP-A-57 212 024 (SUMITOMO ELEC IND KK), 27. Dezember 1982
- PATENT ABSTRACTS OF JAPAN, Band 3, Nr.50, (C-44), 27. April 1979;&JP-A-
- 54-24977 (SUMITOMO DENKI KOGYO KK), 24. Februar 1979

## Beschreibung

Die Erfindung betrifft eine wärmeschrumpfbare Umhüllung aus vernetztem, polymerem Kunststoffmaterial mit unterschiedlichem Vernetzungsgrad für einen dichten Abschluß von Gegenständen, wobei mindestens zwei Kunststoffkomponenten mit unterschiedlichen Vernetzungsgraden über die gesamte Fläche der Umhüllung hinweg regelmäßig verteilt angeordnet sind und wobei eine Kunststoffkomponente einen Vernetzungsgrad aufweist, der optimale Schrumpffähigkeit gewährleistet und eine andere Kunststoffkomponente einen Vernetzungsgrad aufweist, der auf optimale mechanische Festigkeit gegen Weiterreißen abgestimmt ist.

Aus der DE-OS 19 25 739 sind unterschiedliche vernetzte Formteile und ein Verfahren zu ihrer Herstellung bekannt. Diese Formteile bestehen aus einem ersten Teil aus einem vernetzten, unschmelzbarem Polymermaterial und aus einem zweiten Teil aus einem schmelzbaren, im wesentlichen unvernetzten Polymermaterial. Dazwischen ist eine undurchlässige Sperrschicht eingelegt. Derartige Formteile sind beispielsweise als Rohre ausgeformt und bilden ein wärmeschrumpfbares Gebilde mit einem äußeren wärmeschrumpfenden Teil und einem zweiten, schmelzbaren, der Abdichtung dienenden, inneren Teil. Bei Verletzungen des wärmeschrumpfenden Teiles, beispielsweise entlang einer Kante, kann beim Schrumpfvorgang infolge der wirkenden Schrumpfkräfte ein Weiterreißen erfolgen, das bis zur Unbrauchbarkeit führen kann. Die darunter liegende, schmelzende Schicht kann hierfür keine Abhilfe schaffen, da durch das Schmelzen des Materials nicht mehr die nötige Festigkeit gegeben ist. Dieses Weiterreißen tritt bevorzugt quer zur Schrumpfrichtung ein.

Aus der europäischen Patentanmeldung EP-A-0 292 676 ist ein wärmerückstellbarer Gegenstand bekannt, bei dem übereinanderliegende Schichten mit verschiedenen Vernetzungsgraden verwendet werden, wobei sich jede Schicht über die gesamte Fläche hinweg gleichmäßig verlaufend erstreckt.

Weiterhin ist aus der europäischen Patentanmeldung EP-A-0 117 025 eine Umhüllung bekannt, die aus einer Schicht aus Polymermaterial und einer Schicht aus einem Gewebe besteht, wobei das Gewebe aus schrumpfbaren Fasern gebildet wird.

Der vorliegenden Erfindung liegt nun die Aufgabe zugrunde, wärmeschrumpfende Umhüllungen zu schaffen, die genügend Widerstand gegenüber mechanischen Beschädigungen, insbesondere gegen Ein- bzw. Weiterreißen, aufweist. Die gestellte Aufgabe wird nun gemäß der Erfindung mit einer ersten wärmeschrumpfenden Umhüllung der eingangs erläuterten Art dadurch gelöst, daß die Bereiche der Kunststoffkomponenten von Kunststoffmaterialien verschiedener Vernetzungsgrade parallel nebeneinander liegend und alternierend in Form einer Bändchenstruktur angeordnet sind, wobei die Schrumpfrichtung in Richtung der Parallelanordnung der Bereiche verläuft.

Die gestellte Aufgabe wird gemäß der Erfindung auch mit einer zweiten wärmeschrumpfenden Umhüllung der eingangs erläuterten Art dadurch gelöst, daß die Umhüllungsfläche eine längs zur Schrumpfrichtung verlaufende Profilstruktur aus nebeneinander liegenden, sich abwechselnden Bändchen und Röhrchen aufweist.

Für die Herstellung von wärmeschrumpfenden Artikeln, zum Beispiel Manschetten oder Rohren, wird durch den strukturellen Aufbau sowie durch Verfahren zu deren Herstellung gegenüber dem derzeitigen Stand der Technik eine deutlich verringerte Weiter- und Einreißanfälligkeit gewährleistet. Bei Verletzungen der Oberfläche durch Einkerbungen, Einschnitte, Berührungen der erhitzten Oberfläche zum Beispiel mit einem für den Wärmeschrumpf notwendigen Propangasbrenner und dergleichen führten bei herkömmlichen wärmeschrumpfenden Artikeln zu Zerstörungen durch Weiterreißen. Die vorliegende Erfindung beruht nun darauf, daß das Weiterreißen durch Einfügung von weiter- und einreißneutralisierenden Bereichen örtlich begrenzt wird bzw. sogar zu dessen Ausbleiben führt. Solche weiter- bzw. einreiß- neutralisierende Bereiche können in verschiedener Weise erreicht werden.

Eine bevorzugte Maßnahme zur Erzielung dieser rißneutralisierenden Bereiche besteht in einer deutlich unterschiedlichen Vernetzung dieser Bereiche gegenüber der übrigen Masse des vernetzten, schrumpffähigen Materials. Stärker vernetzte Bereiche besitzen im geweiteten Zustand die zum Schrumpfen erforderlichen hohen Rückschrumpfkräfte, sie sind naturgemäß rißgefährdet, wenn sie beim Schrumpfprozeß am Rückschrumpfen behindert werden. Bereiche geringerer Vernetzung besitzen geringere Schrumpfkräfte - die tragen kaum beim Schrumpfprozeß bei - und sind bedeutend beständiger gegen ein Weiterreißen quer zur Schrumpfrichtung. In diesem Bereich wird ein beginnender Riß (durch Verletzung, Einschnitt) senkrecht zur Schrumpfrichtung aufgehalten.

Eine einfache Herstellungsweise ergibt sich durch Coextrusion vernetzbarer, polymerer Werkstoffe mit unterschiedlicher Vernetzungscharakteristik bei anschließender Elektronenstrahlvernetzung. Besonders einfach gelingt dies durch eine unterschiedlich hohe Dotierung von Vernetzungsverstärkern wie zum Beispiel Triallylcyanurat (TAC), Triallylisocyanurat (TAIC), Ethylenglykoldimethylacrylat (EDMA) und dergleichen.

In einer Ausführungsform der erfindungsgemäß rißneutralisierenden Bereiche erfolgt die durch Coextrusion erzielbare Anordnung beispielsweise schichtenweise im sogenannten Sandwichaufbau, wobei jeweils die Vernetzungsgrade der einzelnen Kunststofflagen unterschiedlich sind.

Eine weitere Möglichkeit zur Herstellung von wärmeschrumpfbaren Flächen gemäß der Erfindung ergibt sich auch dadurch, wenn die Bereiche von Kunststoffmaterialien verschiedener Vernetzungsgrade parallel nebeneinander liegend und alternierend angeordnet sind, wobei letzten Endes nach der Einprägung des Formgedächtnisses die Schrumpfrichtung senkrecht zur Parallelanordnung der einzelnen Bereiche verläuft. So wechseln sich beispielsweise bei der Extrusion Materialbereiche mit niedrigem und hohem Anteil von Vernetzungsbeschleunigern ab, so daß dadurch bei der anschließenden Elektronenstrahlvernetzung vorzugsweise parallel angeordnete Bereiche mit unterschiedlichen Vernetzungsgraden entstehen.

Die der Erfindung zugrunde liegende Aufgabe läßt sich weiterhin ausführen bzw. verbessern durch eine geeignete geometrische Form und einen dazu passenden Aufbau der wärmeschrumpfenden Flächen, wobei entsprechende Kombinationen mit zusätzlichen mechanischen Verstärkungen den Einsatzbereich erweitern.

Eine weitere Maßnahme zur Erzielung bzw. Verstärkung der rißneutralisierenden Bereiche besteht in einer nachträglichen Reduzierung der Schrumpfkraft dieser Bereiche nach der Aufweitung durch selektive Nachvernetzung dieser Bereiche, wobei die Nachvernetzung im geweiteten Zustand die Rückschrumpfkraft verringert.

Die Erfindung wird nun anhand von sieben Figuren näher erläutert.
- Figur 1: zeigt eine wärmeschrumpfende Fläche in Sandwichbauweise.
- Figur 2: zeigt eine wärmeschrumpfbare Fläche mit parallel liegendem Bereich unterschiedlicher Vernetzungsgrade.
- Figur 3: zeigt eine wärmeschrumpfbare Fläche mit geringer Einreißanfälligkeit durch eine geeignete geometrische Form.
- Figur 4: zeigt eine modifizierte Ausführungsform einer wärmeschrumpfbaren Fläche nach Figur 2.
- Figur 5: zeigt eine modifizierte Ausführungsform einer wärmeschrumpfbaren Fläche nach Figur 3.
- Figur 6: zeigt eine wärmeschrumpfbare Fläche gemäß der Erfindung mit eingelagerten Verstärkungselementen in Form von Fasern.
- Figur 7: zeigt eine wärmeschrumpfbare Fläche gemäß der Erfindung mit einer Einlage aus einer Polymerschaumfolie.

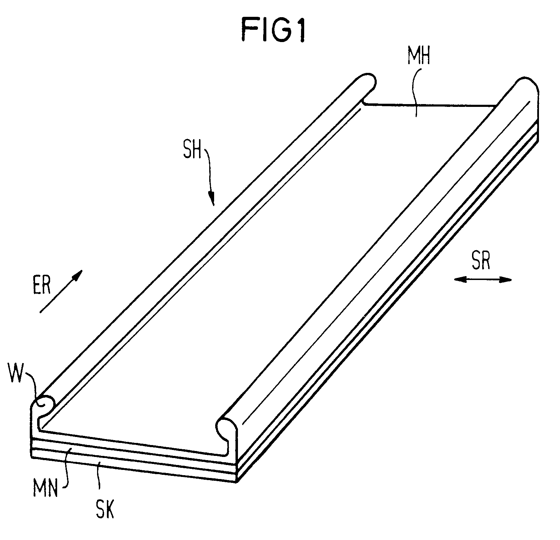

In Figur 1 wird eine schrumpfbare Umhüllung SH gezeigt, bei der gemäß der Erfindung die Einreißanfälligkeit erheblich gemindert ist. Diese Umhüllung SH ist in Sandwichbauweise hergestellt und besteht z.B. auf seiner Außenseite aus einem hochvernetzten Polymermaterial MH und einer darunter liegenden Schicht aus niedrig vernetztem Polymermaterial MN. Beide Polymermaterialien sind in der Grundkonzeption jedoch gleich oder zumindest gegeneinander so verträglich, daß zwischen ihnen eine gute Haftung zustande kommt. Beide Schichten aus den Polymermaterialien sind jedoch bei Schrumpftemperatur nicht schmelzbar, wobei die Schrumpfwirkung in erster Linie von der hochvernetzten Materialkomponente MH herrührt, obwohl für die Einprägung des Formgedächtnisses beide Schichten miteinander gedehnt werden. Die erfinderische Wirkung beruht eben auf dem verschiedenartigen Verhalten der Polymerfolien während des Schrumpfvorganges. Der niedrige Vernetzungsgrad in der Materialkomponente MN ist gerade so groß, daß sie bei Schrumpftemperatur nicht schmilzt. Für die Abdichtung zum umhüllten Gegenstand hin kann zusätzlich eine schmelzende Schicht, zum Beispiel aus einem an sich bekannten Schmelzkleber SK, auf der nach innen weisenden Seite aufgetragen sein. Die Herstellung einer solchen Umhüllung bzw. später schrumpfbaren Fläche erfolgt vorzugsweise durch Extrusion wobei die Extrusionsrichtung ER in diesem Fall zweckmäßigerweise so gelegt ist, daß entlang der beiden Längsränder entsprechende Wülste W mit angeformt werden können, die zum Beispiel als Verschlußelemente zusammen mit einer diese Wülste W umfassenden Schienenklammer verwendet werden. Die Dehnungsrichtung und damit auch die Schrumpfrichtung SR ist senkrecht zur Extrusionsrichtung ER gewählt, so daß die Umhüllung SH auf den umfaßten Gegenstand aufgeschrumpft werden kann. Wenn bei dieser Umhüllung SH eine Verletzung der Oberfläche erfolgt, wird das Einreißen oder auch Weiterreißen durch die zweite, nahezu schrumpfkraftfreie Schicht verhindert. Durch die geringe Vernetzung wird jedoch andererseits verhindert, daß diese Schicht bei Schrumpftemperatur schmilzt.

Die Ausführung in Sandwich ist jedoch nicht auf zwei unterschiedlich vernetzbare Schichten beschränkt. Denkbar sind beliebig viele alternierend angeordnete Schichten unterschiedlicher Vernetzung. Eine Einschränkung ist hier lediglich aus wirtschaftlichen Aspekten zu sehen. Auch kann die erste, äußere Schicht eine schwach vernetzte Schicht MN sein, und die erste darunterliegende eine hochvernetzte Schicht SH.

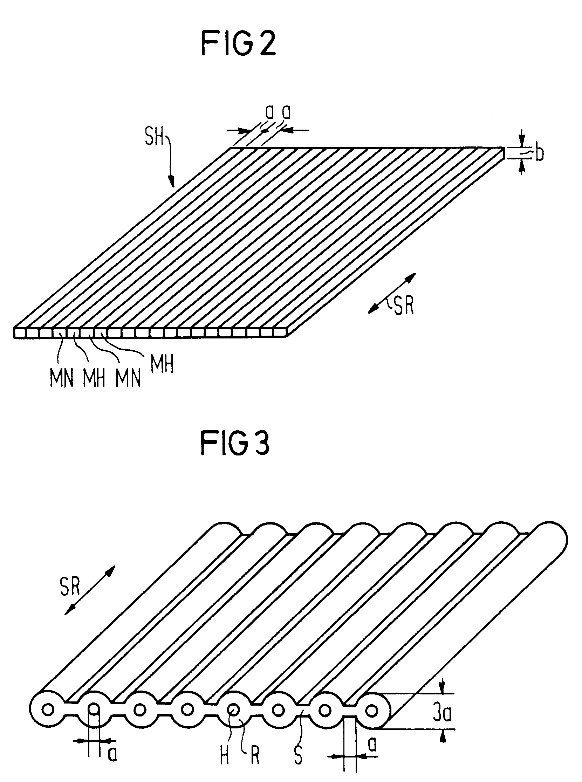

Die Figur 2 verdeutlicht eine schrumpfbare Fläche, die zum Beispiel ebenfalls als schrumpfbare Umhüllung SH mit seitlichen Verschlußelementen ausgebildet und verwendet werden kann. Sie besteht nach der Erfindung in diesem Fall aus parallel nebeneinander liegenden, alternierend angeordneten Bereichen aus Polymermaterialien verschiedener Vernetzungsgrade, nämlich aus Bereichen mit niedrig vernetztem Polymermaterial MN und Bereiche aus hochvernetztem Polymermaterial MH. Durch die Abwechslung dieser Bereiche ist wiederum gewährleistet, daß sich eine Beschädigung an der Oberfläche nicht über größere Entfernung hin ausbreiten kann, da immer wieder Bereiche mit niedrig vernetztem Polymermaterial, das heißt Bereiche mit geringerer Schrumpfkraft, dazwischen liegen. Vorzugsweise sind die Breitenausdehnungen jedes Bereiches in etwa gleich, wobei dies nicht zwingend ist und es können je nach Festigkeitswunsch bzw. Einsatzfall auch andere Maßverhältnisse zugrunde gelegt werden. Die Dicke b dieser schrumpfbaren Umhüllung SH kann ebenfalls je nach Bedarf gewählt werden, doch ist sie im allgemeinen kleiner als die Breitenausdehnung a. Auch diese Fläche läßt sich in einfacher Weise nach dem Extrusionsverfahren herstellen, wobei hier die Schrumpfrichtung SR aufgrund des eingeprägten Formgedächtnisses durch Dehnung nach der Elektronenbestrahlung in Extrusionsrichtung ER erfolgt.

Die Figur 3 zeigt nun ein weiteres Ausführungsbeispiel gemäß der Erfindung für eine schrumpfbare Fläche, insbesondere für eine schrumpfbare Umhüllung SH, bei der die Minderung der Einreißanfälligkeit bei Beschädigung mit einer speziellen Formgebung der Oberfläche erreicht wird. Hier wird eine geometrische Form gewählt, bei der sich die Bereiche zur Verhinderung des Weiterreißens an den sich verjüngenden Stellen des Flächengebildes ausbilden. Hier wird eine längsextrudierte Fläche SH aus längsverlaufenden Röhrchen R mit Hohlräumen H und dazwischen liegenden Stegen S gewählt. Dabei ist besonders günstig, wenn die Außenduchmesser der Röhrchen R etwa dreimal so groß sind als die Durchmesser ihrer Hohlräume H. Die zwischen zwei Röhrchen R befindlichen Stege S sind jeweils so breit wie der Durchmesser eines Hohlraums H; doch können diese Dimensionierungen jeweils dem Anwendungsfall entsprechend auch in anderer Weise festgesetzt werden. Bei Schrumpfung in der angezeigten Schrumpfrichtung SR sind die Schrumpfkräfte an den sich verdickenden Stellen durch die geometrische Formgebung größer als in den Stegen S, so daß sich auf diese Weise wiederum Bereiche ausbilden, durch die ein Ein- bzw. Weiterreißen gestoppt wird. Die Extrusionsrichtung ER ist ebenfalls gleich der späteren Schrumpfrichtung SR.

Außerdem ist mit diesem Gebilde ein weiterer Schichtenaufbau möglich in Kombination zum Beispiel mit einer schmelzenden Schicht aus einem Schmelzkleber oder auch anderen dem jeweiligen Anwendungsfall entsprechenden, modifizierten Schichten.

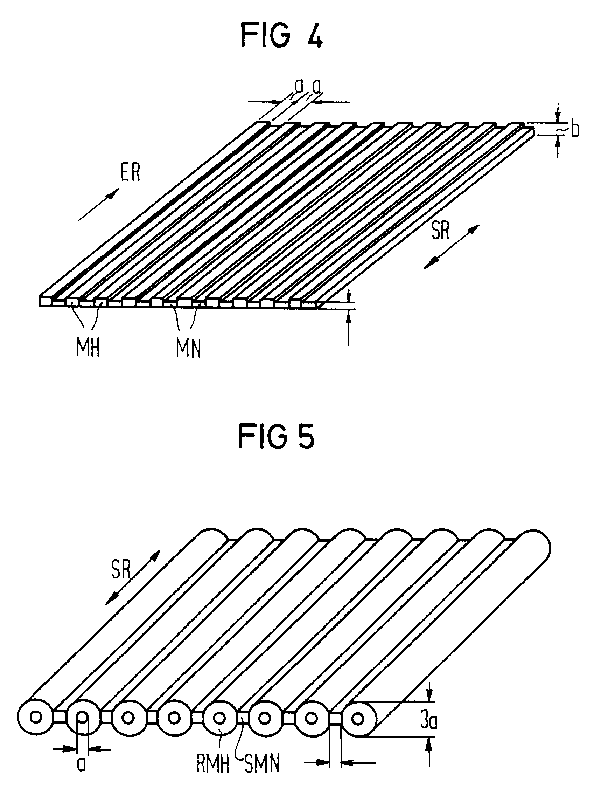

Die Figur 4 zeigt ein Ausführungsbeispiel gemäß der Erfindung, bei der die Bereiche zur Verhinderung des Weiterreißens bei Oberflächenbeschädigung aus einer Kombination der Ausführungsbeispiele nach Figur 2 und nach Figur 3 gebildet werden. Dies bedeutet, es werden in Längsrichtung ER parallel nebeneinander liegende Bereiche MN und MH mit voneinander verschiedenen Vernetzungsgraden mit Bereichen, die eine das Weiterreißen behindernde geometrische Formgebung aufweisen, kombiniert. Diese Formgebung ist beispielsweise dadurch bestimmt, daß die einzelnen Bereiche verschiedene Dicke aufweisen, so daß an den Sprungstellen eine sprunghafte Änderung der Schrumpfkräfte erfolgt. So ergänzen sich beide Wirkungen und begünstigen somit die Widerstandsfähigkeit. Die Maßverhältnisse können auch hier den Erfordernissen angepaßt werden, doch ergeben sich besonders günstige Verhältnisse, wenn die Bereiche verschiedener Vernetzungsgrade gleich breit sind und wenn für die Dicke der hochvernetzten Bereiche MH ein Drittel der Höhe b der niedrigvernetzten Bereiche MN gewählt wird.

Das Ausführungsbeispiel gemäß der Erfindung nach Figur 5 entspricht dem der Figur 4, jedoch ist hier wiederum die Röhrchenstruktur nach Figur 3 mit zugrunde gelegt. Es werden also zusätzlich zur Bildung der das Weiterreißen verhindernden Bereiche durch geeignete Formgebung auch verschiedene Bereiche mit unterschiedlichen Vernetzungsgraden verwendet. So bestehen zum Beispiel die vorherigen Stege S nunmehr aus niedrigvernetztem Polymermaterial SMN und die vorigen Röhrchen R werden aus hochvernetztem Polymermaterial RMH gebildet. Auch diese Fläche läßt sich in einfacher Weise durch Coextrusion aus Polymermaterial mit verschiedenen Anteilen von Vernetzungsbeschleunigern herstellen, die dann einem Vernetzungsvorgang mit Elektronenbestrahlung unterzogen wird. Nach der Dehnung senkrecht zur Extrusionsrichtung ER unter den an sich bekannten Bedingungen besitzt die Fläche ein Schrumpfvermögen, das bei Erwärmung wirksam wird. Durch die alternierende Abwechslung von niedrigvernetztem und hochvernetztem Polymermaterial läßt sich somit auch hier in der oben bereits beschriebenen Weise das Einreißen bzw. Weiterreißen verhindern.

In einer weiteren Ausführungsform können die in Figur 5 niedrigvernetzenden Stegbereiche weiter ausgebildet sein und gegebenenfalls die hochvernetzten Röhrchen völlig einbetten.

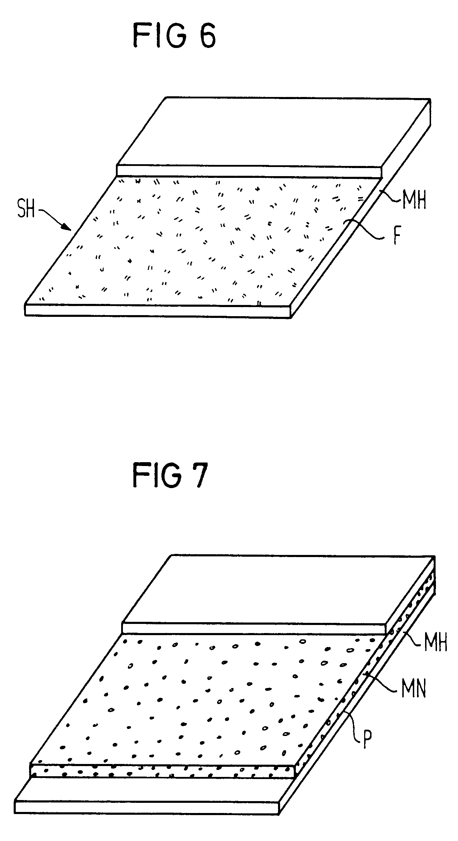

Die Figur 6 zeigt ein Beispiel für eine schrumpfbare Umhüllung SH aus verschiedenen Polymerschichten, in denen Fasern F aus Polymeren oder polymerverträglichen Werkstoffen eingelagert sind. Die Fasern F wirken hier entweder einzeln oder zusammen mit den anderen Schichten als das Weiterreißen verhindernde Bereiche und bewirken zudem zusätzlich eine mechanische Verstärkung des wärmeschrumpfenden Artikels. Es können beispielsweise hier auch Gewebe oder Gewirke aus derartigen Fasern F eingelagert werden, wobei die Gewebe bzw. Gewirke fest oder lose Knotenpunkte aufweisen können. Die Fasern F für sich alleine wie auch im Verbund des Gewebes oder Gewirkes können selbst auch bei Wärmezufuhr schrumpfende Eigenschaften aufweisen, so daß insgesamt zusätzlich eine Schrumpfverstärkung zustande kommt. Die Fasern selbst sind in einem solchen Fall ebenfalls vernetzt und anschließend bei den geeigneten Verhältnissen gedehnt und somit mit einem Formgedächtnis versehen.

Die Figur 7 verdeutlicht ein Ausführungsbeispiel gemäß der Erfindung, bei dem eine vernetzte und damit wärmeschrumpfbare Polymerfolie, insbesondere eine Polyethylenfolie in Sandwichaufbauweise zusammen mit den übrigen Schichten aus verschieden vernetzten Polymermaterialien verwendet ist. Das Verhindern des Weiterreißens wird dann optimal erfüllt, wenn die niedrig vernetzte Schicht MN zusätzlich Poren P enthält, die gleichmäßig verteilt sind und wenn das Porenvolumen nicht mehr als 30% des Polymeren beträgt. Die Poren P bilden dabei Bereiche zusätzlicher Behinderung des Weiterreißens.

Schließlich läßt sich die der Erfindung zugrunde liegende Wirkungsweise auch dadurch erreichen, wenn die Fläche bzw. Umhüllung SH mittels Elektronenstrahlen alternierend bestrahlte bzw. mehr oder weniger unbestrahlte Bereiche erhält. Auf diese Weise wird die Herstellung von Bereichen verschiedener Vernetzungsgrade völlig in den Bestrahlungsvorgang verlegt. Solche verschiedenen Bestrahlungsbereiche ergeben sich durch entsprechende Abdeckungen zum Beispiel durch Auflegen eines Bleigitters oder durch ähnliche Maßnahmen.

Ganz allgemein liegt der Gedanke gemäß der Erfindung darin, daß alle polymeren Werkstoffe, die einerseits aus Bereichen mit definierter Schrumpfkraft sowie andererseits aus Bereichen mit geringerer oder kleinerer Schrumpfkraft bestehen. Die erstgenannten Bereiche bewirken die notwendige Wärmeverformung des Artikels und die letztgenannten Bereiche hingegen bewirken die Verhinderung des Weiterreißens bei Beschädigungen der Oberfläche.

Bevorzugte Polymermassen enthalten als wesentliche Bestandteile:
a) ein teilkristallines Polyolefin, z.B. Polyethylen hoher Dichte (HDPF), Polyethylen niederer Dichte (LDPE), lineares Ethylencopolymer (LLDPE, LMDPE) in einem Anteil von 60% - 95 %, statt eines einzelnen teilkristallinen Polyolefins kann auch eine Abmischung z.B. verschiedener Polyethylene in beliebiger Zusammensetzung verwendet werden,
b) gegebenenfalls Ethylencopolymere mit Comonomeren polaren Charakters, z.B. Vinylacetat, Butylacrylat in Anteilen von 5 - 30 %,
c) Füllstoffe, insbesondere Ruß in Anteilen von 1 - 25%. Zusätzlich enthalten diese Polymermassen Alterungsschutzmittel, insbesondere Antioxidantien aus der Gruppe bekannter sterisch gehinderter Phenole und Amine; gegebenenfalls Verarbeitungshilfsmittel und Vernetzungsverstärker in unterschiedlicher Dotierung.

## Patentansprüche

1. Wärmeschrumpfbare Umhüllung aus vernetztem, polymerem Kunststoffmaterial mit unterschiedlichem Vernetzungsgrad für einen dichten Abschluß von Gegenständen, wobei mindestens zwei Kunststoffkomponenten mit unterschiedlichen Vernetzungsgraden über die gesamte Fläche der Umhüllung hinweg regelmäßig verteilt angeordnet sind und wobei eine Kunststoffkomponente einen Vernetzungsgrad aufweist, der optimale Schrumpffähigkeit gewährleistet und eine andere Kunststoffkomponente einen Vernetzungsgrad aufweist, der auf optimale mechanische Festigkeit gegen Weiterreißen abgestimmt ist,
**dadurch gekennzeichnet,**
daß die Bereiche der Kunststoffkomponenten von Kunststoffmaterialien verschiedener Vernetzungsgrade parallel nebeneinander liegend und alternierend in Form einer Bändchenstruktur angeordnet sind, wobei die Schrumpfrichtung in Richtung der Parallelanordnung der Bereiche verläuft.

2. Wärmeschrumpfbare Umhüllung aus vernetztem, polymerem Kunststoffmaterial mit unterschiedlichem Vernetzungsgrad für einen dichten Abschluß von Gegenständen, wobei mindestens zwei Kunststoffkomponenten mit unterschiedlichen Vernetzungsgraden über die gesamte Fläche der Umhüllung hinweg regelmäßig verteilt angeordnet sind und wobei eine Kunststoffkomponente einen Vernetzungsgrad aufweist, der optimale Schrumpffähigkeit gewährleistet und eine andere Kunststoffkomponente einen Vernetzungsgrad aufweist, der auf optimale mechanische Festigkeit gegen Weiterreißen abgestimmt ist,
**dadurch gekennzeichnet,**
daß die Umhüllungsfläche eine längs zur Schrumpfrichtung verlaufende Profilstruktur aus nebeneinander liegenden, sich abwechselnden Bändchen und Röhrchen aufweist.

3. Wärmeschrumpfbare Umhüllung nach Anspruch 1,
**dadurch gekennzeichnet,**
daß die Umhüllungsfläche eine verschieden stark ausgebildete Bändchenstruktur aufweist.

4. Wärmeschrumpfbare Umhüllung nach einem der vorhergehenden Ansprüche,
**dadurch gekennzeichnet,**
daß die Kunststoffmaterialien der verschiedenen Vernetzungsgrade unterschiedliche Anteile von Vernetzungsbeschleunigern aufweisen, vorzugsweise von Triallylcyanurat, Triallylisocyanurat, Ethylenglycoldimethacrylat.

5. Wärmeschrumpfbare Umhüllung nach einem der vorhergehenden Ansprüche,
**dadurch gekennzeichnet,**
daß die Kunststoffmaterialien durch Elektronenbestrahlung vernetzt sind.

6. Wärmeschrumpfbare Umhüllung nach einem der vorhergehenden Ansprüche,
**dadurch gekennzeichnet,**
daß verschieden stark schrumpfende Bereiche durch eine wechselnde geometrische Formenwahl, vorzugsweise durch verschiedene Wahl der Materialstärke, gebildet sind.

7. Wärmeschrumpfbare Umhüllung nach einem der vorhergehenden Ansprüche,
**dadurch gekennzeichnet,**
daß die Kunststoffmaterialien verschiedener Vernetzungsgrade als Folien in Sandwichart übereinander liegend angeordnet sind.

8. Wärmeschrumpfbare Umhüllung nach einem der vorhergehenden Ansprüche,
**dadurch gekennzeichnet,**
daß die Umhüllung in Kombination von Sandwichbauweise mit Flächen alternierend wechselnder Schrumpfbereiche aufgebaut ist.

9. Wärmeschrumpfbare Umhüllung nach einem der vorhergehenden Ansprüche,
**dadurch gekennzeichnet,**
daß Zusatzfolien, vorzugsweise aus High-Density-Polyethylen (HDPE) oder aus Low-Density-Polyethylen (LDPE) auf die Umhüllung aufgebracht sind und daß diese gegebenenfalls schwach vernetzt sind.

10. Wärmeschrumpfbare Umhüllung nach einem der vorhergehenden Ansprüche,
**dadurch gekennzeichnet,**
daß Fasern aus polymeren Materialien, vorzugsweise aus vernetzten Polyolefinen, thermoplastischen Elastomeren, Polyamiden, Polyestern usw., eingelagert sind.

11. Wärmeschrumpfbare Umhüllung nach einem der vorhergehenden Ansprüche,
**dadurch gekennzeichnet,**
daß Fasern aus polymerverträglichen Stoffen, vorzugsweise Glasfasern, eingelagert sind.

12. Wärmeschrumpfbare Umhüllung nach einem der vorhergehenden Ansprüche,
**dadurch gekennzeichnet,**
daß die Fasern schrumpffähig sind.

13. Wärmeschrumpfbare Umhüllung nach einem der vorhergehenden Ansprüche,
**dadurch gekennzeichnet,**
daß die Fasern zu einem Gewirke oder Gewebe zusammengefügt sind.

14. Wärmeschrumpfbare Umhüllung nach einem der vorhergehenden Ansprüche,
**dadurch gekennzeichnet,**
daß eine wärmeschrumpfbare Polymerschaumfolie, vorzugsweise aus Polyethylen, in die Umhüllung eingebracht ist.

15. Wärmeschrumpfbare Umhüllung nach Anspruch 14,
**dadurch gekennzeichnet,**
daß die Poren der Polymerschaumfolie gleichmäßig verteilt und das Porenvolumen nicht mehr als 30% beträgt.

16. Wärmeschrumpfbare Umhüllung nach einem der vorhergehenden Ansprüche,
**dadurch gekennzeichnet,**
daß die Kunststoffmaterialien verschiedener Vernetzungsgrade mit verschieden dosierten Vernetzungsbeschleunigern versehen und coextrudiert einer Elektronenbestrahlung unterzogen und längs zum Verlauf der verschieden starken Schrumpfbereiche geweitet sind.

17. Wärmeschrumpfbare Umhüllung nach einem der vorhergehenden Ansprüche,
**dadurch gekennzeichnet,**
daß die Bereiche von Kunststoffmaterialien verschiedener Vernetzungsgrade durch verschieden starke Elektronenbestrahlung, insbesondere durch bereichsweise daß die Bereiche von Kunststoffmaterialien verschiedener Vernetzungsgrade durch verschieden starke Elektronenbestrahlung, insbesondere durch bereichsweise Abdeckung gegen Elektronenbestrahlung, wie zum Beispiel durch Metallgitter, hergestellt sind.

18. Wärmeschrumpfbare Umhüllung nach einem der vorhergehenden Ansprüche,
**dadurch gekennzeichnet,**
daß die Kunststoffmaterialien vorzugsweise enthalten:
a) ein teilkristallines Polyolefin, z.B. Polyethylen hoher Dichte (HDPF), Polyethylen niederer Dichte (LDPE), lineares Ethylenbcopolymer (LLDPE, LMDPE) in einem Anteil von 60 - 95%; statt eines einzelnen teilkristallinen Polyolefins kann auch eine Abmischung zum Beispiel verschiedener Polyolefine in beliebiger Zusammnensetzung verwendet werden,
b) gegebenenfalls Ethylencopolymere mit Conomeren polaren Charakters, z.B. Vinylacetat, Butylacrylat in Anteilen von 5 - 30%,
c) Füllstoffe, insbesondere Ruß in Anteilen von 1 - 25%.
Zusätzlich enthalten diese Polymermassen Alterungsschutzmittel, insbesondere Antioxidantien aus der Gruppe bekannter sterisch gehinderter Phenole und Amine; gegebenenfalls Verarbeitungshilfsmittel und Vernetzungsverstärker in unterschiedlicher Dotierung.

## Claims

1. Heat-shrinkable envelope of crosslinked, polymeric plastic material having a differing degree of crosslinkage for forming a tight closure on articles, at least two plastic components having different degrees of crosslinkage being arranged such that they are distributed regularly over the entire surface area of the envelope and one plastic component having a degree of crosslinkage which ensures optimum shrinkability and another plastic component having a degree of crosslinkage which is designed for optimum mechanical resistance to continued tearing, characterized in that the regions of the plastic components of plastic materials of different degrees of crosslinkage are arranged such that they lie parallel next to one another and alternate in the form of a structure of small bands, the direction of shrinkage running in the direction of the parallel arrangement of the regions.

2. Heat-shrinkable envelope of crosslinked, polymeric plastic material having a differing degree of crosslinkage for forming a tight closure on articles, at least two plastic components having different degrees of crosslinkage being arranged such that they are distributed regularly over the entire surface area of the envelope and one plastic component having a degree of crosslinkage which ensures optimum shrinkability and another plastic component having a degree of crosslinkage which is designed for optimum mechanical resistance to continued tearing, characterized in that the envelope surface has a profiled structure running longitudinally with respect to the direction of shrinkage and comprising alternating small bands and small tubes lying next to one another.

3. Heat-shrinkable envelope according to Claim 1, characterized in that the envelope surface has a varyingly pronounced structure of small bands.

4. Heat-shrinkable envelope according to one of the preceding claims, characterized in that the plastic materials of different degrees of crosslinkage have different proportions of crosslinking accelerators, preferably of triallyl cyanurate, triallyl isocyanurate or ethyleneglycoldimethacrylate.

5. Heat-shrinkable envelope according to one of the preceding claims, characterized in that the plastic materials are crosslinked by electron irradiation.

6. Heat-shrinkable envelope according to one of the preceding claims, characterized in that regions shrinking to different extents are formed by a changing choice of geometrical form, preferably by varying choice of the material thickness.

7. Heat-shrinkable envelope according to one of the preceding claims, characterized in that the plastic materials of different degrees of crosslinkage are arranged as films lying one on top of the other in a sandwich-like manner.

8. Heat-shrinkable envelope according to one of the preceding claims, characterized in that the envelope is constructed in a combination of sandwich design with surface areas of alternately changing shrinkage regions.

9. Heat-shrinkable envelope according to one of the preceding claims, characterized in that additional films, preferably of high-density polyethylene (HDPE) or of low-density polyethylene (LDPE) are applied on the envelope and that these additional films are, if appropriate, weakly crosslinked.

10. Heat-shrinkable envelope according to one of the preceding claims, characterized in that fibres of polymer materials, preferably of crosslinked polyolefins, thermoplastic elastomers, polyamides, polyesters etc, are incorporated.

11. Heat-shrinkable envelope according to one of the preceding claims, characterized in that fibres of polymer-compatible substances, preferably glass fibres, are incorporated.

12. Heat-shrinkable envelope according to one of the preceding claims, characterized in that the fibres are shrinkable.

13. Heat-shrinkable envelope according to one of the preceding claims, characterized in that the fibres are joined together to form a knitted or woven fabric.

14. Heat-shrinkable envelope according to one of the preceding claims, characterized in that a heat-shrinkable polymer foam film, preferably of polyethylene, is introduced into the envelope.

15. Heat-shrinkable envelope according to Claim 14, characterized in that the cells of the polymer foam film are uniformly distributed and the cell volume does not exceed 30%.

16. Heat-shrinkable envelope according to one of the preceding claims, characterized in that the plastic materials of different degrees of crosslinkage are provided with differently doped crosslinking accelerators and coextruded, subjected to electron irradiation, and extended longitudinally in relation to the course of the varyingly pronounced shrinkage regions.

17. Heat-shrinkable envelope according to one of the preceding claims, characterized in that the regions of plastic materials of different degrees of crosslinkage are produced by varyingly intensive electron irradiation, in particular by regional masking against electron irradiation, such as for example by metal grids.

18. Heat-shrinkable envelope according to one of the preceding claims, characterized in that the plastic materials preferably contain:
a) a partially crystalline polyolefin, for example high-density polyethylene (HDPE), low-density polyethylene (LDPE), linear ethylene copolymers (LLDPE, LMDPE) in a proportion of 60 - 95%; instead of a single partially crystalline polyolefin, a blend for example of various polyolefins in any desired composition may also be used,
b) if appropriate, ethylene copolymers with comonomers of polar character, for example vinylacetate, butylacrylate, in proportions of 5 - 30%,
c) fillers, in particular carbon black, in proportions of 1 - 25%.
In addition, these polymer compositions contain anti-aging agents, in particular anti-oxidants from the group of known sterically inhibited phenols and amines; if appropriate, processing agents and crosslinking promoters in differing dopage.

## Revendications

1. Manchon thermorétractable en matière plastique polymère réticulée ayant des degrés différents de réticulation et destiné à la fermeture étanche d'objets, dans lequel au moins deux constituants en matière plastique ayant des degrés différents de réticulation sont répartis uniformément sur toute la surface du manchon, et dans lequel un constituant en matière plastique a un degré de réticulation assurant une rétractabilité optimale, alors qu'un autre constituant en matière plastique a un degré de réticulation qui est adapté pour assurer une résistance mécanique optimale à la propagation du déchirement,
caractérisé en ce que les zones des constituants en matière plastique de degrés différents de réticulation sont disposées parallèlement les unes à côté des autres et en alternance sous la forme d'une structure en bandelettes, le sens de retrait s'étendant dans le sens de la disposition parallèle des zones.

2. Manchon thermorétractable en matière plastique polymère réticulée ayant des degrés différents de réticulation et destiné à la fermeture étanche d'objets, dans lequel au moins deux constituants en matière plastique ayant des degrés différents de réticulation sont répartis uniformément sur toute la surface du manchon, et dans lequel un constituant en matière plastique a un degré de réticulation assurant une rétractabilité optimale, alors qu'un autre constituant en matière plastique a un degré de réticulation qui est adapté pour assurer une résistance mécanique optimale à la propagation du déchirement,
caractérisé en ce que la surface du manchon a une structure profilée s'étendant le long du sens de retrait et constituée de bandelettes et de tubes alternés situés les uns à côté des autres.

3. Manchon thermorétractable selon la revendication 1,
caractérisé en ce que la surface du manchon a une structure de bandelettes de différentes épaisseurs.

4. Manchon thermorétractable selon l'une quelconque des revendications précédentes,
caractérisé en ce que les matières plastiques de degrés différents de réticulation contiennent diverses proportions d'accélérateurs de réticulation, de préférence de cyanurate de triallyle, d'isocyanurate de triallyle, de diméthacrylate d'éthylèneglycol.

5. Manchon thermorétractable selon l'une quelconque des revendications précédentes,
caractérisé en ce que les matières plastiques sont réticulées par exposition à des électrons.

6. Manchon thermorétractable selon l'une quelconque des revendications précédentes,
caractérisé en ce que des zones de force de retrait variable sont constituées par un choix de forme géométrique alternée, de préférence par un choix différent de l'épaisseur de la matière.

7. Manchon thermorétractable selon l'une quelconque des revendications précédentes,
caractérisé en ce que les matières plastiques des degrés différents de réticulation sont disposées en tant que films superposés en type sandwich.

8. Manchon thermorétractable selon l'une quelconque des revendications précédentes,
caractérisé en ce que le manchon est réalisé par combinaison de type sandwich avec des surfaces alternées de zones de retrait variable.

9. Manchon thermorétractable selon l'une quelconque des revendications précédentes,
caractérisé en ce que des films supplémentaires sont appliqués sur le manchon, de préférence en polyéthylène haute densité (HDPE) ou en polyéthylène basse densité (LDPE), et que ces films sont le cas échéant faiblement réticulés.

10. Manchon thermorétractable selon l'une quelconque des revendications précédentes,
caractérisé en ce qu'il y a inclusion de fibres en matières polymères, de préférence en polyoléfines réticulées, élastomères thermoplastiques, polyamides, polyesters, etc.

11. Manchon thermorétractable selon l'une quelconque des revendications précédentes,
caractérisé en ce qu'il y a inclusion de fibres en matières compatibles avec le polymère, de préférence de fibres de verre.

12. Manchon thermorétractable selon l'une quelconque des revendications précédentes,
caractérisé en ce que les fibres sont rétractables.

13. Manchon thermorétractable selon l'une quelconque des revendications précédentes,
caractérisé en ce que les fibres sont reliées en un tricot ou en un tissu.

14. Manchon thermorétractable selon l'une quelconque des revendications précédentes,
caractérisé en ce qu'un film en mousse polymère thermorétractable, de préférence en polyéthylène, est inséré dans le manchon.

15. Manchon thermorétractable selon la revendication 14,
caractérisé en ce que les pores du film en mousse polymère sont uniformément répartis et que le volume poreux ne représente pas plus de 30 %.

16. Manchon thermorétractable selon l'une quelconque des revendications précédentes,
caractérisé en ce que les matières plastiques de degrés différents de réticulation contiennent des accélérateurs de réticulation en des doses différentes, qu'une fois co-extrudées, elles sont exposées à des électrons, et qu'elles sont étirées dans le sens longitudinal des zones de force de retrait variable.

17. Manchon thermorétractable selon l'une quelconque des revendications précédentes,
caractérisé en ce que les zones de matières plastiques de degrés différents de réticulation sont obtenues par exposition à des électrons de différente intensité, en particulier en protégeant certaines zones de l'exposition aux électrons, par exemple par des grilles métalliques.

18. Manchon thermorétractable selon l'une quelconque des revendications précédentes,
caractérisé en ce que les matières plastiques contiennent de préférence :
a) une polyoléfine semi-cristalline, par exemple du polyéthylène haute densité (HDPF), du polyéthylène basse densité (LDPE), du copolymère d'éthylène linéaire (LLDPE, LMDPE) dans une proportion de 60 à 95 % ; au lieu d'une seule polyoléfine semi-cristalline, il est par exemple également possible d'utiliser un mélange de diverses polyoléfines de n'importe quelle composition,
b) le cas échéant de copolymères d'éthylène ayant des comomères polaires, par exemple de l'acétate de vinyle, de l'acrylate de butyle dans des proportions de 5 à 30 %,
c) des charges, notamment de la suie dans des proportions de 1 à 25 %.
Ces compositions polymères contiennent en plus des agents de protection contre le vieillissement, notamment des antioxydants du groupe des phénols et des amines connues à empêchement ; le cas échéant des adjuvants de mise en oeuvre et des renforçateurs de réticulation en des doses différentes.
